# EUROPEAN PATENT SPECIFICATION

(11) **EP 2 605 969 B1**
(45) Date of publication and mention of the grant of the patent: **13.05.2015**
(21) Application number: 11768115.5
(22) Date of filing: 19.08.2011
(51) Int. Cl.: B65B 1/46, A61J 3/07, G01G 13/02, G01G 15/00, G01G 17/00

(54) **FILLING MACHINE AND METHOD FOR WEIGHING ARTICLES**
ABFÜLLMASCHINE UND VERFAHREN ZUM WIEGEN VON ARTIKELN
MACHINE DE REMPLISSAGE ET PROCÉDÉ POUR LE PESAGE D'ARTICLES

(30) Priority: 20.08.2010 IT BO20100522
(43) Date of publication of application: 26.06.2013
(73) Proprietor: IMA Industria Macchine Automatiche S.p.A., 40064 Ozzano dell'Emilia (Bologna) (IT)
(72) Inventor: CONSOLI, Salvatore Fabrizio, I-40127 Bologna (IT); TREBBI, Roberto, I-40055 Castenaso (BO) (IT)
(74) Representative: Crugnola, Pietro
(86) International application number: PCT/IB2011/053657
(87) International publication number: WO 2012/023118

(56) References cited:
- EP-A1- 0 685 714
- WO-A1-97/31244
- WO-A1-2010/003280
- WO-A2-2010/061349
- DE-C1- 19 819 395

## Description

The present invention relates to a filling machine comprising a total weight checking system and a method for weighing articles, in particular capsules, gelcaps or similar elements, filled with pharmaceutical products by an automatic filling machine.

The document WO 2010/061349 A2 discloses such a filling machine and weighing method.

In processes of filling hard gelatine capsules with liquid, powder, granular or compressed pharmaceutical products, using weighing apparatuses or devices placed downstream of the filling machine, or of the filling group, is known to measure the weight of the product dosed inside the capsules. It is necessary to check the weight to reject from production non-conforming capsules - for example because they contain a quantity of product outside the permitted dosage tolerance range - and/or to correct possible excesses or defects in dosing of the product.

Especially in the pharmaceutical field, it is very important to check that the weight of the product dosed in the single capsules is exactly the required dose, with very narrow tolerance ranges.

Generally, the capsules are weighed once only at the end of dosing, as the weight of the empty capsules is known and contained within a preset tolerance range, indicated and guaranteed by the suppliers/manufacturers of the capsules. In this manner, from the measurement of the weight of the filled capsules (gross weight) by subtracting the known weight of the empty capsules (tare), it is possible to calculate the weight of the dosed product (net weight) with a certain degree of precision.

The weighing apparatuses that perform this type of direct measurement comprise electronic scales, which are typically provided with load cells on which the capsules have to be positioned for a suitable time.

Systems and weighing apparatuses are also known that perform this type of measurement indirectly, for example by means of capacitive sensors that are suitable for detecting the weight of the product dosed inside the capsules by exploiting the chemical and physical features of the product. Such indirect weighing systems and apparatuses are generally less accurate and precise than direct weighing by scales and load cells.

Weight checking can be partial, statistical, i.e. conducted on a sample of filled capsules chosen at random, or can be total, conducted on all the filled capsules leaving the filling machine (total or 100% weight check).

In the filling processes in which the quantity of product to be dosed inside each capsule is very small, for example just a few milligrams (so-called "microdosages") and/or the range of tolerance required for the product dosage is close, for example ±10%, it is clear that normal variations in the weight of the empty capsules affect and greatly influence the weight measurement. In fact, as the weight of the empty capsules is comparable to that of the dosed product, such weight variations can be greater than the tolerance range on the required dosage. In this case, checking only the weight of the filled capsules is not sufficient to ensure that the quantity of dosed product is within the required limits and it is necessary to weigh each empty capsules beforehand and calculate the weight of the dosed product through the difference.

For this purpose, weighing systems have been devised that comprise a first weighing unit, upstream of the machine or of the filling unit, which measures the weight of the empty capsules (tare), and a second weighing unit, downstream of the filling machine, which measures the weight of the filled capsules (gross weight). The filled capsules leaving the filling machine are sent to an accumulating tank from which they are then sent, one at a time, to the second weighing unit. The difference between the gross weight and the tare, measured and stored for each capsule by a control unit of the machine, enables said control unit to calculate the net weight of the dosed product.

As the capsules are accumulated in a random manner in the tank and are transferred from the latter to the second weighing unit, again in a random manner, it is not, however, possible to associate the gross weight of a filled capsule with the tare of the corresponding empty capsule, so that the detected net weight is of necessity imprecise.

An object of the present invention is to improve total or 100% weight checking systems and methods for weighing all articles such as capsules or similar elements filled with a product by a filling machine or packaged by a packaging machine.

Another object is to provide a system for measuring by a weighing apparatus the weight of all the capsules leaving the filling machine, which enables the speed of the filling machine and/or of the weighing apparatus to be varied, in particular which enables the filling machine to be kept operative during weighing apparatus downtime.

A further object is to devise a total or 100% weight checking system and method that enable the position of each capsule to be identified with precision and in real time, ensuring the traceability of the capsule, to control through feedback filling systems of the filling machine.

A further object is to devise a total weight checking system and method that enable the position of each capsule to be identified with precision and in real time, ensuring the traceability of the capsule, to identify precisely and accurately single dosators that are malfunctioning and thus to be replaced.

Such objects and still others are reached by a filling machine and a method devised according to one or more of the claims set out below.

The invention can be better understood and implemented with reference to the attached drawings that illustrate some embodiments thereof by way of non-limiting example, in which:
Figure 1 is a schematic front, partially section view of a total weight checking system for weighing capsules, or similar elements, according to the invention in association with a filling machine for filling such capsules, which is partially illustrated;
Figure 2 is a schematic plan view of the system in Figure 1;
Figure 3 is an enlarged detail of Figure 1, illustrating a weighing apparatus for weighing the capsules and, partially, transferring means for transferring said capsules;
Figure 4 is another enlarged detail of Figure 1, illustrating the transferring means in association with a movement wheel of the filling machine.

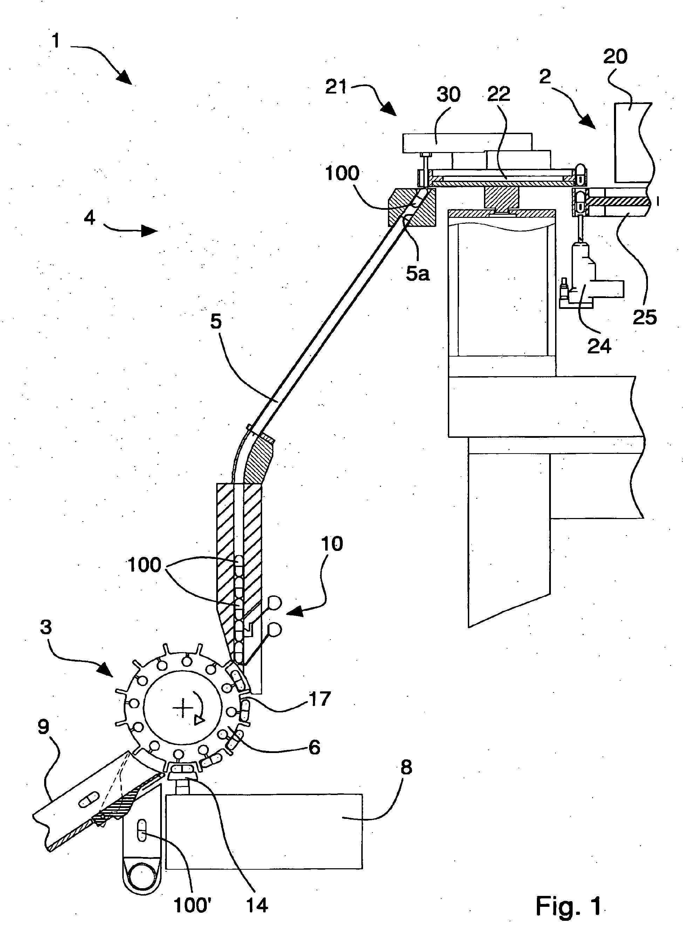

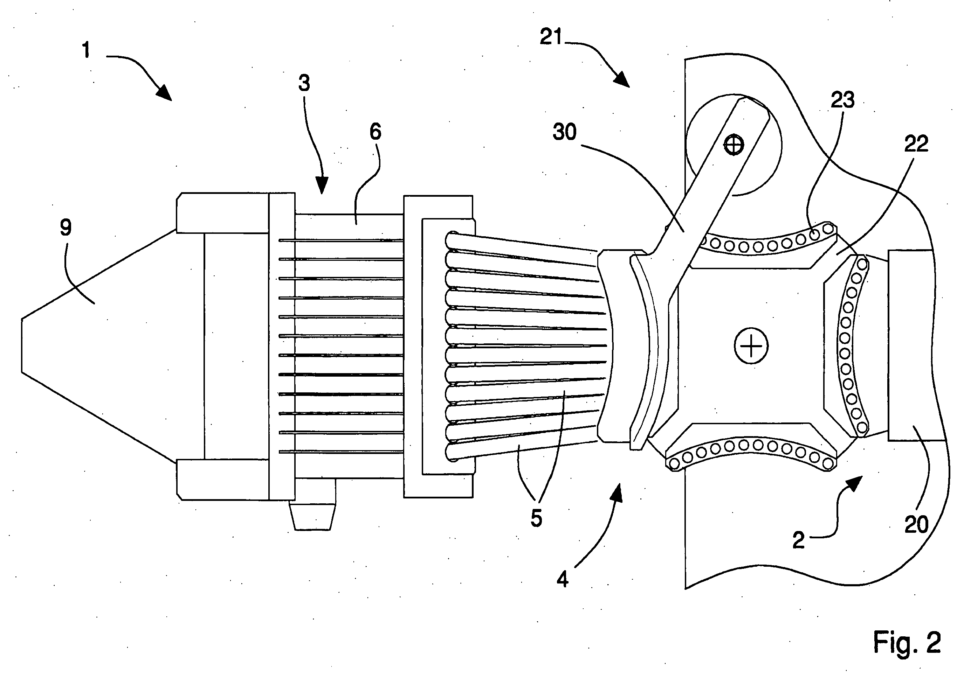

With reference to Figures 1 to 4, there is illustrated a total or 100% weight checking system 1 for weighing articles 100, in particular capsules, or similar elements, filled with product according to a defined filling order in a packaging machine 2, in particular a filling machine 2, of known type and not illustrated in detail, with one or more filling stations or groups 20. The capsules 100 are, for example, of the lid-bottom type and are made of hard gelatine.

The system 1 comprises a weighing apparatus 3 to measure the weight of the capsules 100 and transferring means 4 to transfer the latter from the filling machine 2 to the weighing apparatus 3 according to the filling order.

The transferring means 4 comprises removing means 21 for removing the filled capsules 100 from the filling machine 2 and conveying means 5 for receiving the aforesaid capsules 100 from the removing means 21 and conveying the aforesaid capsules 100 in sequence and according to the filling order as far as the weighing apparatus 3.

The conveying means comprises one or more conduits 5 arranged for housing through accumulation a plurality of capsules 100 coming from the filling machine 2 during operation, typically in the event of arrest and/or slowing of the aforesaid weighing apparatus 3.

The conduits 5 are arranged for receiving the capsules 100 released by the removing means 21 and conveying the capsules 100 slidably by gravity to movement means 6 of the weighing apparatus 3.

In one embodiment that is not shown, pressure means can be provided that is connected above to the conduits 5 (or vacuum means can be provided that is connected below to the conduits 5) to encourage the descent of the capsules 100. The conduits 5 are substantially parallel to one another, each of which comprising a first portion, adjacent to the filling machine 2 and tilted, and a second portion, adjacent to the weighing apparatus 3 and substantially vertical.

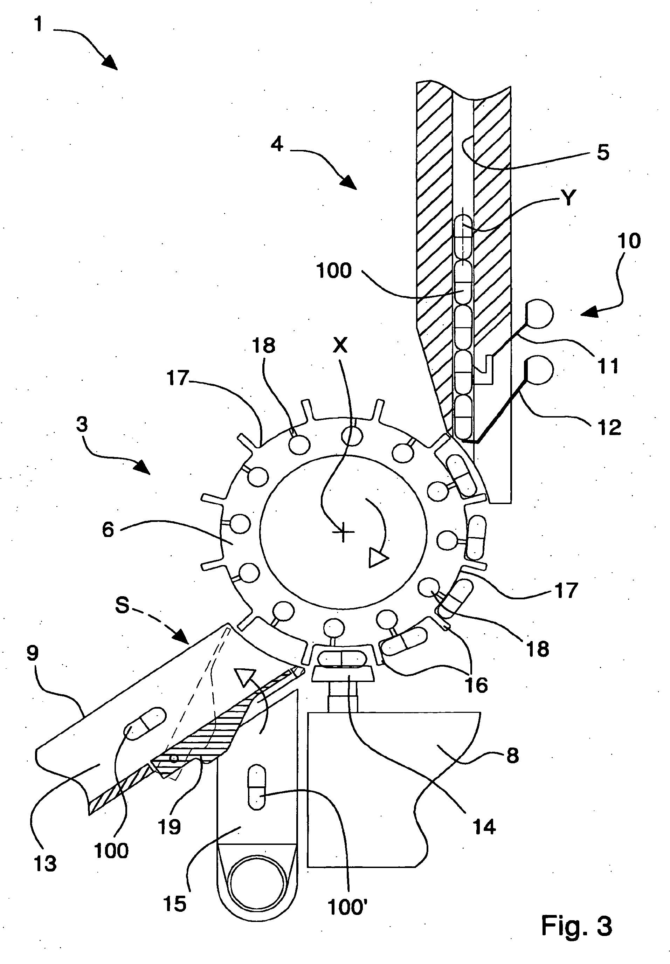

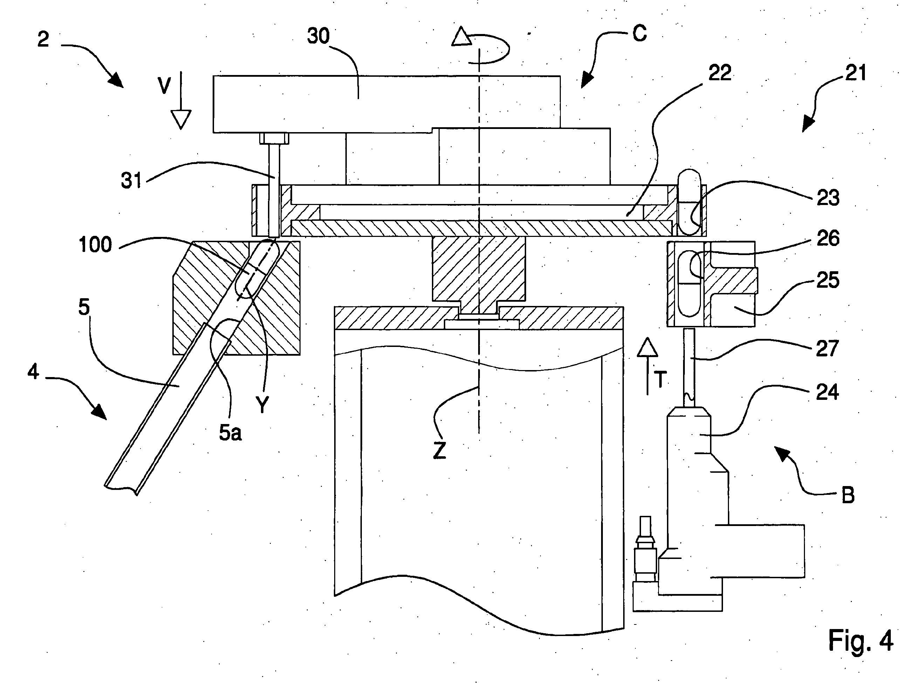

Each conduit 5 has an internal (for example circular) section with a shape and dimensions that are such as to enable sliding by gravity of the capsules 100 arranged with the respective longitudinal axis Y parallel to the aforesaid conduit 5 (Figures 3 and 4). The length of the conduit 5 is such as to be able to receive a plurality of capsules 100-in particular a defined maximum number of capsules-arranged aligned and stacked, in mutual contact, in the event of an arrest or slowing of the weighing apparatus 3. As explained in greater detail further on in the description, the conveying means 5 acts as a storage unit or accumulating magazine for the capsules 100.

The transferring means 4 comprises arresting means 10 that is selectively drivable for releasing the capsules 100 to the movement means 6, in an operative condition of the system 1 in which the weighing apparatus 3 is regularly operative, or for locking the capsules 100 accumulating in the conduits 5, for example in an arrest condition of the weighing apparatus 3.

The arresting means 10, of known type and illustrated schematically in the figures, comprises, for example for each conduit 5 a respective pair of arresting levers 11, 12 driven in combination to enable one capsule 100 at a time to descend in the movement means 6 when the system 1 is in the operative condition.

The movement means 6 transfers each capsule 100 singularly from the respective conduit 5 of the transferring means 4 to a weighing unit 8 and from the latter to outlet means 9. With particular reference to figure 3, the movement means 6 includes drum means that rotates around an axis X, for example a horizontal axis, and is provided with a plurality of peripheral housings 17 that are suitable for receiving respective capsules 100 from the conduits 5. The drum means 6 is further provided with retaining means 18 that is suitable for locking the capsules 100 in and releasing the capsules 100 from the respective housings 17.

The retaining means 18 is, for example, of the air suction or vacuum type and comprises sucking holes made at the housings 17 and connected by internal conduits to a sucking or vacuum source that is of known type and is not illustrated.

The weighing unit 8 comprises electronic scales provided with one or more load cells 14, arranged parallel, that are able to measure in a weighing time the weight of one capsule 100 at a time. In particular, the number of load cells 14 is the same as the number of conduits 5.

The outlet means 9 comprises a plurality of slide conduits 13 provided with respective deviating means 19 that is movable and drivable in a reject position S such as to direct possible capsules 100' with a non-conformant weight to the collecting means 15.

With particular reference to figure 4, the removing means 21 of the transferring means 4 positions the filled capsules 100 at respective conduits 5 and comprises a transferring wheel 22 that is rotatable in an indexed manner or intermittently around a vertical axis Z and is provided with a plurality of first peripheral seats 23 that is able to receive and retain the capsules 100 coming from a filling station or group 20 of the filling machine 2 located upstream. In particular, the transferring wheel 22 transfers the capsules 100 from a movement wheel 25 of the filling machine 2 to the conveying means 5 in a guided and orderly manner according to the defined filling order.

The removing means 21 includes inserting means 24 that extracts the capsules 100 from second seats 26 of the movement wheel 25 and inserts said capsules 100 in the first seats 23 of the transferring wheel 22.

The first seats 23 of the transferring wheel 22 and the second seats 26 of the movement wheel 25 comprise respective through and converging cavities, for example cavities with a conical shape that enable the capsules 100 to be inserted on one side and along a preset insertion direction and prevent the exit thereof from the opposite side. Owing to the converging shape, the capsules 100 can be locked inside the seats 23, 26 through interference.

With reference to the embodiment illustrated in the figures, the second seats 26 of the movement wheel 25 converge downwards, also to prevent the capsules 100 falling during the transfer, whilst the first seats 23 of the transferring wheel 22 converge upwards to enable the transfer from the movement wheel 25 to the transferring wheel 22.

The inserting means 24 comprises a plurality of pins 27 that are drivable singly and independently of one another between a lowered non-operative position B, in which they do not interfere with the movement wheel 25, and a raised operative position (which is not illustrated) in which they are inserted inside the second seats 26 of the movement wheel 25 so as to extract the capsules 100 from the movement wheel 25 and push the capsules 100 in the first seats 23 of the transferring wheel 22. The pins 27 are movable from the lowered non-operative position B to the raised operative position according to an inserting direction T of the capsules 100 in the first seats 23 of the transferring wheel 22 that is directed from the bottom to the top.

The transferring wheel 22 is suitable for positioning the first seats 23, and thus the capsules 100 contained therein, at, and immediately above, inlets 5a of the respective conduits 5 of the transferring means 4.

The inlets 5a of the conduits 5 are thus arranged immediately below the first seats 23.

The transferring means 21 further comprises extracting means 30 to transfer in a guided manner and according to the defined filling order the capsules 100 from the first seats 23 of the transferring wheel 22 to the respective conduits 5 through the inlets 5a.

The extracting means 30 includes a plurality of further pins 31 that are movable between a respective raised position (not illustrated), in which they do not interfere with the transferring wheel 22, and a respective lowered position C in which they are inserted inside the first seats 23 of the transferring wheel 22 so as to extract the capsules 100 from the transferring wheel 22 and push the capsules 100 into the conduits 5. The further pins 31 are movable according to an extracting direction V of the capsules 100 from the first seats 23 of the transferring wheel 22 that is opposite the inserting direction T, i.e. directed from top to bottom.

In one version of the system that is not illustrated, the extracting means 30 comprises nozzles for blowing a jet of pressurised air into the first seats 23 of the transferring wheel 22 to push out the capsules 100 downwards.

During normal operation of the system 1 of the invention, the capsules 100 are removed by the transferring means 4 from the movement wheel 25 of the filling machine 2, in particular the capsules 100 are inserted into the conduits 5 by the extracting means 30, which extracts the aforesaid capsules 100 from the transferring wheel 22, the latter receiving the capsules 100 extracted from the movement wheel 25 by the inserting means 24.

The capsules 100 descend by gravity inside the respective conduits 5 until they come to stop at the arresting means 10, which releases one capsule 100 at a time to the drum means 6.

The latter rotate with reciprocal movement with angular steps to transfer the capsules 100 from the conduits 5 to the load cells 14 of the scales 8. During the transfer to the load cells 14, the capsules 100 remain locked in the respective housings 17 owing to the retaining means 18 that is activated.

When a housing 17 is at the respective load cell 14, during rotation of the drum means 6, the retaining means 18 acting on said housing is deactivated so as to enable the corresponding capsule 100 to be released onto the load cell 14, which measures the weight thereof.

The weighing time that is necessary for weighing a capsule 100 is less than the downtime of the drum means 6 between two successive angular steps in the reciprocating motion.

At the end of weighing, the drum means is rotated and by protruding elements 16 of the peripheral housings 17 the drum means pushes the capsule 100 that has just been weighed to a respective sliding conduit 13 of the outlet means 9.

If the weight of the capsule 100 is conformant, the deviating means 19 is maintained in a rest position, whilst if the weight of the capsule 100' is not conformant, the deviating means 19 is arranged in a reject position S to deviate the aforesaid capsule to the collecting means 15.

It should be noted that during normal operation the operative speed of the weighing apparatus 3, i.e. the time corresponding to a step of the drum means 6, is substantially the same as the operative speed of the filling machine 2, i.e. the time corresponding to a step of the transferring wheel 22. In other words, the number of capsules over the unit of time leaving the filling machine 2 is substantially the same as the number of capsules weighed over the unit of time by the weighing apparatus 3.

It should be noted that the transferring means 4 acting as a storage unit or accumulating magazine of the capsules 100 enable the respective operative speeds of the filling machine 2 and of the weighing apparatus 3 to be separated. For example, if the movement means 6 has to be arrested to enable cleaning and/or resetting operations to be performed on the load cells 14 of the scales 8, it is possible to maintain the filling machine 2 in operation without stopping the filling machine 2, at least for a preset period of time. The capsules 100, in fact, can be progressively housed in a row and accumulated, stacked on top of one another, inside the conduits 5 according to the filling order. The aforesaid filling order is assured by the removing means 21, which is able to remove one after the other in an ordered sequence the capsules 100 from the movement wheel 25 and then transfer the capsules 100 and insert the capsules 100 in the same sequence into the conveying means 5.

At the end of these cleaning and/or resetting operations, it is possible to increase the speed of the weighing apparatus 3 and dispose of the accumulated capsules 100 until the weighing apparatus 3 is again placed in step with the filling machine 2, without losing the productivity of the filling machine 2.

It should be noted that this accumulating method ensures the traceability of each cap 100 because the capsules 100 are housed and accumulated according to the filling order, i.e. "in phase", i.e. stacked in the order or sequence in which they have been filled in the filling machine 2 and thus transferred from the removing means 21 to the conduits 5. Further, the capsules 100 are transferred from the conduits 5 to the weighing apparatus 3, where they are always weighed in phase. In other words, the filling order of the capsules 100 is maintained by the filling station 20 of the filling machine 2 through the movement wheel 25, the transferring wheel 22, the conveying means 5 and the drum means 6 as far as the weighing unit 8.

Maintaining the capsules 100 in phase as far as the weighing apparatus 3 enables the position of each capsule 100 inside the filling machine 2 and the weighing system 1 to be identified each instant and data relating to the weight of all the capsules 100 to be obtained, which data can be effectively used to control the filling machine 2 through feedback, in particular the filling station 20, and to identify single defective and malfunctioning dosators. In fact, as only capsules filled by the same dosator reach the same load cell, irregular filling of single capsules 100 detected by the weighing unit 8 can be immediately associated with single dosators, which can thus be replaced. On the other hand, if the capsules 100 were to reach the weighing unit 8 in a random order (for example by feeder hoppers) and were to be weighed at random, data would be obtained that were time-disconnected from the filling machine 2 and not associated with the single dosators, so that feedback control actions of the dosing groups or stations of the filling machine 2 would of necessity be imprecise and ineffective, and it would be impossible to associate a single cap 100 with the corresponding dosator that had carried out the filling and it would be impossible to identify possible malfunctioning single dosators.

In the case of multidosages, performed in filling machines 2 with several filling stations, in order to identify malfunctions of single dosators of the filling stations, it is possible to operate the filling machine 2 preliminarily with just one filling station at a time, such as to associate the weight of each single capsule 100 with only one dosator.

In order to control through feedback the filling machine 2, control means is provided (which is not illustrated) comprising a processing unit connected to the weighing apparatus 3 that processes data relating to the weight of the capsules 100 accumulated in phase in the conduits 5 and weighed in the weighing apparatus 3. On the basis of such data, the control means controls the filling stations of the filling machine 2.

It is also possible, for example in the event of microdosages, to associate with the filling machine 2 a further weighing apparatus, for example an electronic scale with one or more load cells, for weighing the empty capsules 100 and further transferring means for transferring in an orderly manner to the filling machine 2 the empty capsules 100 weighed by the further weighing apparatus. The further transferring means can advantageously comprise one or more further carousels or movement wheels, for example of the type of the movement wheel 22 illustrated, with a plurality of peripheral housings suitable for receiving and transferring in an orderly manner the capsules 100. This further transferring means can also comprise one or more further conduits of the type illustrated before to house and accumulate in step the empty weighed capsules. These further conduits can advantageously connect the further weighing apparatus to the further movement wheel, or to the filling machine 2.

It is thus possible for each capsule 100 to detect in an accurate and precise manner the weight when empty (tare) and the weight when filled (gross weight) and to calculate through the weight difference the weight of the dosed product (net weight). In this manner, possible variations in the weight of the empty capsules cannot influence the final measurement.

For this purpose, the processing unit is connected to the weighing apparatus 3 and to the further weighing apparatus to receive data relating to the weights measured directly for each processed, empty and filled capsule 100.

It is opportune to note that the transferring means 4 of the invention also enables the speed of the filling machine 2 to be slowed without slowing or stopping the weighing apparatus 3.

It is possible to apply the total weight checking method of the invention to the weighing system 1 and to the filling machine 2 to weigh all the capsules 100, or similar elements, filled with product in the aforesaid filling machine.

This method comprises the steps of filling the empty capsules 100 by one or more filling groups or stations of the filling machine 2 according to a preset filling order; removing the filled capsules 100 from the filling machine and conveying the filled capsules 100 by the removing means 21, to the conveying means 5; accumulating the filled capsules 100 in the conveying means 5; transferring the filled capsules 100 from the conveying means 5 to the weighing apparatus 3; weighing the filled capsules 100 in the weighing apparatus 3 to detect data relating to the weight of the filled capsules 100; the filled capsules 100 being removed and conveyed, accumulated, transferred and weighed according to the aforesaid predefined filling order. Advantageously, the method can further process data relating to the weight of the filled capsules 100 in a processing unit; and controlling, on the basis of said data, the filling groups or stations of the filling machine 2 by control means.

It is further possible, as explained before, to identify and replace, on the basis of said data, possible malfunctioning single dosators of the aforesaid one or more filling groups or stations of the filling machine 2.

The advantages of the aforesaid method are the same as those of the weighing system specified above.

It should be noted how with the system and method according to the invention it is possible to check all the filled capsules 100, i.e. it is possible to achieve total or 100% weight checking without losing productivity.

Modifications can be made to the disclosed system and method that are all part of the invention.

For example, conduits with a different shape and dimensions from those of the conduits 5 illustrated in the figures can be made according to specific geometrical arrangements of the filling machine 2 and of the weighing apparatus 3.

## Claims

1. Filling machine (2) suitable for filling capsules (100) according to a defined filling order comprising a total weight checking system for capsules (100) filled with product comprising a weighing apparatus (3) for weighing all the aforesaid capsules (100) and transferring means (4) for transferring said capsules (100) from said filling machine (2) to said weighing apparatus (3), **characterised in that** said transferring means (4) comprises removing means (21) and conveying means (5), said removing means (21) being suitable for removing said capsules (100) from said filling machine (2) and for transferring the capsules to said conveying means (5) according to said defined filling order, said conveying means (5) being positioned below said removing means (21) and being suitable for housing and accumulating, in particular in the event of stopping or slowing of said weighing apparatus (3), a plurality of capsules (100) according to said defined filling order and transferring said capsules (100) to the weighing apparatus (3) according to said defined filling order, wherein said conveying means comprises at least one conduit (5) arranged for receiving respective capsules (100) from said removing means (21) and conveying the capsules (100) slidably to said weighing apparatus (3) according to said defined filling order, said at least one conduit (5) having a respective inlet (5a) arranged immediately below the removing means (21) for receiving from the latter the capsules (100) in a guided manner and according to said defined filling order.

2. Filling machine (2) according to claim 1, wherein said at least one conduit (5) has an internal section of a shape and dimensions such as to enable said capsules (100) to slide to said weighing apparatus (3) and length such as to house and accumulate a definite number of capsules (100) arranged aligned and stacked according to said defined filling order.

3. Filling machine (2) according to claim 2, wherein said transferring means (4) comprises arresting means (10) that is selectively drivable for releasing said capsules (100) to said weighing apparatus (3), in an operating condition, or for locking said capsules (100) that accumulate inside said conveying means (5), in particular in the event of a stop of said weighing apparatus (3).

4. Filling machine (2) according to any preceding claim, wherein said removing means (21) comprises:
- a transferring wheel (22) for transferring said capsules (100) from a movement wheel (25) of the filling machine (2) to said conveying means (5), said transferring wheel (22) being provided with a plurality of first seats (23) that are suitable for receiving and retaining the capsules (100) received from the movement wheel (25);
- inserting means (24) for extracting the capsules (100) from second seats (26) of said movement wheel (25) and inserting the capsules (100) in the first seats (23) of said transferring wheel (22);
- extracting means (30) for extracting the capsules (100) from the first seats (23) of said transferring wheel (22) and pushing the capsules (100) into said conveying means (5).

5. Filling machine (2) according to claim 4, wherein at least said first seats (23) comprise respective through and converging cavities in such a manner as to enable said capsules (100) to be inserted on one side and along a preset insertion direction (T) and to prevent the exit thereof from an opposite side, further locking said capsules (100) through interference.

6. Filling machine (2) according to claim 5, wherein said inlet (5a) of at least one conduit (5) is arranged immediately below respective said first seats (23), said extracting means being movable along an extracting direction (V) to push downwards the capsules (100) in the respective conduits (5) through the respective inlets.

7. Filling machine (2) according to any preceding claim, wherein said total weight checking system further comprises control means with a processing unit connected to the weighing apparatus (3) suitable for processing data relating to weights of the filled capsules (100) accumulated in said transferring means (4) and weighed in the weighing apparatus (3) according to said defined filling order, said control means being suitable for controlling filling groups or stations of the filling machine (2) on the basis of said data.

8. Filling machine (2) according to claim 7, wherein said total weight checking system further comprises a further weighing apparatus for weighing the empty capsules (100) and further transferring means for transferring in an orderly manner the empty capsules (100) weighed by the further weighing apparatus to the filling machine (2).

9. Filling machine (2) according to claim 8, wherein the control means with the processing unit is connected to the further weighing apparatus to process data relating to weights of the empty capsules (100), said control means being suitable for obtaining net weights of the capsules (100) on the basis of said weights of the empty and filled capsules (100).

10. Total weight checking method for capsules (100), comprising the steps of:
- filling the empty capsules (100) by at least one filling station (20) of a filling machine (2) according to a defined filling order;
- removing the filled capsules (100) from the filling machine (2) and transporting the filled capsules (100) by removing means (21) of transferring means (4), to conveying means (5) of the transferring means (4);
- conveying the capsules (100) slidably towards a weighing apparatus (3) through at least one conduit of said conveying means (5);
- accumulating the filled capsules (100) in said at least one conduit of said conveying means (5);
- transferring the filled capsules (100) from said at least one conduit of said conveying means (5) to said weighing apparatus (3);
- weighing the filled capsules (100) in the weighing apparatus (3) to detect data relating to weights of the filled capsules (100);
wherein said transporting includes delivering the capsules (100) to a respective inlet (5a) of said at least one conduit (5), said inlet (5a) being arranged immediately below the removing means (21) so that said at least one conduit receives from the removing means (21) the capsules (100) in a guided manner and according to said defined filling order, said method being **characterised in that** the filled capsules (100) are removed and transported, conveyed, accumulated, transferred and weighed according to said defined filling order.

11. Method according to claim 10 comprising the steps of:
- processing said data relating to the weight of the filled capsules (100) in a processing unit; and
- controlling, on the basis of said data, the at least one filling station (20) of the filling machine (2) by control means.

12. Method according to claim 10, comprising the steps of:
- processing said data relating to the weight of the filled capsules (100) in a processing unit; and
- identifying, on the basis of said data, possible single malfunctioning dosators of said at least one filling station (20) of the filling machine (2).

13. Method according to claim 12, comprising the step of replacing said possible single malfunctioning dosators.

14. Method according to any one of claims 10 to 13, comprising the steps of:
- weighing empty capsules (100) in a further weighing apparatus to detect data relating to weights of the empty capsules (100);
- transferring in an orderly manner the empty capsules (100) from the further weighing apparatus to the filling machine (2); and
- obtaining net weights of the filled capsules (100) on the basis of said data relating to weights of the empty and filled capsules (100).

## Patentansprüche

1. Füllmaschine (2), die geeignet ist, um Kapseln (100) gemäß einer definierten Füllanweisung zu füllen, die ein System zur Kontrolle des Gesamtgewichts der Kapseln (100) aufweist, die mit einem Produkt gefüllt sind, aufweisend eine Wiegeapparatur (3) zum Wiegen sämtlicher der zuvor genannten Kapseln (100) und Übertragungsmittel (4) zum Übertragen der Kapseln (100) von der Füllmaschine (2) zu der Wiegeapparatur (3), **dadurch gekennzeichnet, dass** die Übertragungsmittel (4) Entnahmemittel (21) und Fördermittel (5) aufweisen, wobei die Entnahmemittel (21) dazu geeignet sind, um die Kapseln (100) von der Füllmaschine (2) zu entnehmen, und um die Kapseln an die Fördermittel (5) gemäß der definierten Füllanweisung zu übertragen, wobei die Fördermittel (5) unterhalb der Entnahmemittel (21) positioniert und geeignet sind, um, insbesondere im Falle des Anhaltens oder Verlangsamens der Wiegeapparatur (3), eine Vielzahl von Kapseln (100) gemäß der definierten Füllanweisung aufzunehmen und zu akkumulieren, und um die Kapseln (100) an die Wiegeapparatur (3) gemäß der definierten Füllanweisung zu übertragen, wobei die Fördermittel zumindest ein Rohr (5) aufweisen, das angeordnet ist, um entsprechende Kapseln (100) von den Entnahmemitteln (21) aufzunehmen und die Kapseln (100) gleitend zu der Wiegeapparatur (3) gemäß der definierten Füllanweisung zu fördern, wobei das zumindest eine Rohr (5) einen jeweiligen Einlass (5a) aufweist, der unmittelbar unter den Entnahmemitteln (21) angeordnet ist, um von den letzteren die Kapseln (100) in einer geführten Weise und gemäß der definierten Füllanweisung aufzunehmen.

2. Füllmaschine (2) gemäß Anspruch 1, wobei das zumindest eine Rohr (2) einen inneren Abschnitt mit solch einer Form und solchen Abmessungen aufweist, die es den Kapseln (100) ermöglichen, zu der Wiegeapparatur (3) zu gleiten, und der solch eine Länge aufweist, um eine bestimmte Anzahl von Kapseln (100) derart aufzunehmen und zu akkumulieren, dass diese gemäß der definierten Füllanweisung aneinandergereiht und gestapelt angeordnet sind.

3. Füllmaschine (2) gemäß Anspruch 2, wobei die Übertragungsmittel (4) Anhaltemittel (10) aufweisen, die selektiv ansteuerbar sind, um in einem Arbeitszustand die Kapseln (100) an die Wiegeapparatur (3) freizugeben, oder um die Kapseln (100) zu blockieren, die im Inneren der Fördermittel (5) akkumulieren, insbesondere im Falle eines Anhaltens der Wiegeapparatur (3).

4. Füllmaschine (2) gemäß einem der vorherigen Ansprüche, wobei die Entnahmemittel (21) Folgendes aufweisen:
- ein Übertragungsrad (22) zum Übertragen der Kapseln (100) von einem Bewegungsrad (25) der Füllmaschine (2) zu den Fördermitteln (5), wobei das Übertragungsrad (22) mit einer Vielzahl von ersten Aufnahmen (23) versehen ist, die geeignet sind, um die Kapseln (100), die von dem Bewegungsrad (25) erhalten werden, aufzunehmen und zu halten;
- Einbringungsmittel (24) zum Entnehmen der Kapseln (100) von zweiten Aufnahmen (26) des Bewegungsrads (25) und Einbringen der Kapseln (100) in die ersten Aufnahmen (23) des Übertragungsrads (22);
- Herausnahmemittel (30) zum Herausnehmen der Kapseln (100) aus den ersten Aufnahmen (23) des Übertragungsrads (22) und Schieben der Kapseln (100) in die Fördermittel (5).

5. Füllmaschine (2) gemäß Anspruch 4, wobei zumindest die ersten Aufnahmen (23) entsprechende Durchgangs- und Konvergierungskavitäten in solch einer Art aufweisen, dass es den Kapseln (100) ermöglicht wird, an einer Seite und entlang einer vorhandenen Einbringungsrichtung (T) eingebracht zu werden, und um das Austreten hieraus von einer gegenüberliegenden Seite zu verhindern, und welche ferner die Kapseln (100) durch Interferenz halten.

6. Füllmaschine (2) gemäß Anspruch 5, wobei der Einlass (5a) von zumindest einem Rohr (5) unmittelbar unterhalb der entsprechenden ersten Aufnahme (23) angeordnet ist, wobei die Herausnahmemittel beweglich sind entlang einer Herausnahmerichtung (V), um die Kapseln (100) in den entsprechenden Rohren (5) durch die entsprechenden Einlässe nach unten zu drücken.

7. Füllmaschine (2) gemäß einem der vorherigen Ansprüche, wobei das System zur Kontrolle des Gesamtgewichts ferner Steuerungsmittel mit einer Verarbeitungseinheit aufweist, die mit der Wiegeapparatur (3) verbunden ist, und dazu geeignet ist, um Daten in Bezug auf das Gewicht der gefüllten Kapseln (100) zu verarbeiten, die gemäß der definierten Füllanweisung in den Übertragungsmitteln (4) akkumuliert wurden und in der Wiegeapparatur (3) gewogen wurden, wobei die Steuerungsmittel geeignet sind, um Füllgruppen oder Stationen der Füllmaschine (2) auf der Basis dieser Daten zu steuern.

8. Füllmaschine (2) gemäß Anspruch 7, wobei das System zur Kontrolle des Gesamtgewichts ferner eine weitere Wiegeapparatur zum Wiegen der leeren Kapseln (100) und weitere Übertragungsmittel aufweist, um auf geordnete Weise die leeren Kapseln (100), die von der weiteren Wiegeapparatur gewogen wurden, an die Füllmaschine (2) zu übertragen.

9. Füllmaschine (2) gemäß Anspruch 8, wobei die Steuerungsmittel mit der Verarbeitungseinheit mit der weiteren Wiegeapparatur verbunden sind, um Daten in Bezug auf das Gewicht der leeren Kapseln (100) zu verarbeiten, wobei die Steuerungsmittel geeignet sind, um Nettogewichte der Kapseln (100) auf der Basis der Gewichte der leeren und gefüllten Kapseln (100) zu erhalten.

10. Verfahren zum Kontrollieren des Gesamtgewichts von Kapseln (100), das die folgenden Schritte aufweist:
- Füllen der leeren Kapseln (100) durch zumindest eine Füllstation (20) einer Füllmaschine (2) gemäß einer definierten Füllanweisung;
- Entnehmen der gefüllten Kapseln (100) aus der Füllmaschine (2) und Transportieren der gefüllten Kapseln (100) über Entnahmemittel (21) der Übertragungsmittel (4) an Fördermittel (5) der Übertragungsmittel (4);
- gleitendes Fördern der Kapseln (100) in Richtung einer Wiegeapparatur (3) durch zumindest ein Rohr der Fördermittel (5);
- Akkumulieren der gefüllten Kapseln (100) in dem zumindest einen Rohr der Fördermittel (5);
- Überführen der gefüllten Kapseln (100) von dem zumindest einen Rohr der Fördermittel (5) an die Wiegeapparatur (3);
- Wiegen der gefüllten Kapseln (100) in der Wiegeapparatur (3), um Daten in Bezug auf die Gewichte der gefüllten Kapseln (100) zu detektieren;
wobei das Transportieren das Zuführen der Kapseln (100) zu einem entsprechenden Einlass (5a) des zumindest einen Rohrs (5) beinhaltet, wobei der Einlass (5a) unmittelbar unter den Entnahmemitteln (21) angeordnet ist, so dass das zumindest eine Rohr von den Entnahmemitteln (21) die Kapseln (100) in geführter Weise und gemäß der definierten Füllanweisung aufnimmt, wobei das Verfahren **dadurch gekennzeichnet ist, dass** die gefüllten Kapseln (100) gemäß der definierten Füllanweisung entnommen und transportiert, gefördert, akkumuliert, überführt und gewogen werden.

11. Verfahren gemäß Anspruch 10, das die folgenden Schritte aufweist:
- Verarbeiten der Daten in Bezug auf das Gewicht der gefüllten Kapseln (100) in einer Verarbeitungseinheit; und
- Steuern, auf der Basis dieser Daten, die zumindest eine Füllstation (20) der Füllmaschine (2) durch Steuerungsmittel.

12. Verfahren gemäß Anspruch 10, das die folgenden Schritte aufweist:
- Verarbeiten der Daten in Bezug auf das Gewicht der gefüllten Kapseln (100) in einer Verarbeitungseinheit; und
- Identifizieren, auf der Basis dieser Daten, von möglichen einzelnen defekten Dosierer der zumindest einen Füllstation (20) der Füllmaschine (2).

13. Verfahren gemäß Anspruch 12, das den Schritt des Ersetzens der möglichen einzelnen defekten Dosierer aufweist.

14. Verfahren gemäß einem der Ansprüche 10 bis 13, das die folgenden Schritte aufweist:
- Wiegen von leeren Kapseln (100) in einer weiteren Wiegeapparatur, um Daten in Bezug auf Gewichte der leeren Kapseln (100) zu detektieren;
- Überführen der leeren Kapseln (100) in geordneter Weise von der weiteren Wiegeapparatur zu der Füllmaschine (2); und
- Erhalten von Nettogewichten der gefüllten Kapseln (100) auf der Basis der Daten in Bezug auf Gewichte der leeren und gefüllten Kapseln (100).

## Revendications

1. Machine de remplissage (2) appropriée pour remplir des capsules (100) selon un ordre de remplissage défini comprenant un système de vérification du poids total pour des capsules (100) remplies de produit comprenant un appareil de pesage (3) pour peser toutes lesdites capsules (100) et un moyen de transfert (4) pour transférer lesdites capsules (100) de ladite machine de remplissage (2) audit appareil de pesage (3), **caractérisée en ce que** ledit moyen de transfert (4) comprend un moyen d'enlèvement (21) et un moyen d'acheminement (5), ledit moyen d'enlèvement (21) étant approprié pour enlever lesdites capsules (100) de ladite machine de remplissage (2) et pour transférer les capsules audit moyen d'acheminement (5) selon ledit ordre de remplissage défini, ledit moyen d'acheminement (5) étant positionné en dessous dudit moyen d'enlèvement (21) et étant approprié pour loger et accumuler, en particulier en cas d'arrêt ou de ralentissement dudit appareil de pesage (3), une pluralité de capsules (100) selon ledit ordre de remplissage défini et pour transférer lesdites capsules (100) vers l'appareil de pesage (3) selon ledit ordre de remplissage défini, dans laquelle ledit moyen d'acheminement comprend au moins un conduit (5) agencé pour recevoir les capsules respectives (100) dudit moyen d'enlèvement (21) et pour acheminer les capsules (100) de façon coulissante audit appareil de pesage (3) selon ledit ordre de remplissage défini, ledit au moins un conduit (5) comprenant une entrée respective (5a) agencée immédiatement en dessous du moyen d'enlèvement (21) pour recevoir de ce dernier les capsules (100) de manière guidée et selon ledit ordre de remplissage défini.

2. Machine de remplissage (2) selon la revendication 1, dans laquelle ledit au moins un conduit (5) présente une section interne d'une forme et de dimensions de manière à permettre auxdites capsules (100) de coulisser audit appareil de pesage (3) et d'une longueur de manière à loger et accumuler un nombre défini de capsules (100) agencées alignées et empilées selon ledit ordre de remplissage défini.

3. Machine de remplissage (2) selon la revendication 2, dans laquelle ledit moyen de transfert (4) comprend un moyen d'arrêt (10) pouvant être commandé sélectivement pour libérer lesdites capsules (100) audit appareil de pesage (3), dans une situation de fonctionnement, ou pour bloquer lesdites capsules (100) qui s'accumulent dans ledit moyen d'acheminement (5), en particulier dans le cas d'un arrêt dudit appareil de pesage (3).

4. Machine de remplissage (2) selon l'une quelconque des revendications précédentes, dans laquelle ledit moyen d'enlèvement (21) comprend:
- une roue de transfert (22) pour transférer lesdites capsules (100) d'une roue de déplacement (25) de la machine de remplissage (2) audit moyen d'acheminement (5), ladite roue de transfert (22) étant pourvue d'une pluralité de premiers sièges (23) étant appropriés pour recevoir et retenir les capsules (100) reçues de la roue de déplacement (25);
- moyen d'insertion (24) pour extraire les capsules (100) des seconds sièges (26) de ladite roue de déplacement (25) et insérer les capsules (100) dans les premiers sièges (23) de ladite roue de transfert (22);
- moyen d'extraction (30) pour extraire les capsules (100) des premiers sièges (23) de ladite roue de transfert (22) et pousser les capsules (100) dans ledit moyen d'acheminement (5).

5. Machine de remplissage (2) selon la revendication 4, dans laquelle au moins lesdits premiers sièges (23) comprennent des cavités traversantes et convergentes respectives de manière à permettre auxdites capsules (100) d'être insérées d'un côté et le long d'une direction d'insertion prédéfinie (T) et pour empêcher la sortie de celles-ci d'un côté opposé, verrouillant en outre lesdites capsules (100) par interférence mécanique.

6. Machine de remplissage (2) selon la revendication 5, dans laquelle ladite entrée (5a) d'au moins un conduit (5) est agencée immédiatement en-dessous desdits premiers sièges respectifs (23), ledit moyen d'extraction pouvant être déplacé le long d'une direction d'extraction (V) pour pousser vers le bas les capsules (100) dans les conduits respectifs (5) à travers les entrées respectives.

7. Machine de remplissage (2) selon l'une quelconque des revendications précédentes, dans laquelle ledit système de vérification du poids total comprend en outre un moyen de commande équipé d'une unité de traitement connectée à l'appareil de pesage (3) appropriée pour traiter des données relatives aux poids des capsules remplies (100) accumulées dans ledit moyen de transfert (4) et pesées dans l'appareil de pesage (3) selon ledit ordre de remplissage défini, lesdits moyens de commande étant appropriés pour commander les groupes ou postes de remplissage de la machine de remplissage (2) à partir desdites données.

8. Machine de remplissage (2) selon la revendication 7, dans laquelle ledit système de vérification du poids total comprend en outre un autre appareil de pesage pour peser les capsules vides (100) et un autre moyen de transfert pour transférer de manière ordonnée les capsules vides (100) pesées par l'autre appareil de pesage à la machine de remplissage (2).

9. Machine de remplissage (2) selon la revendication 8, dans laquelle le moyen de commande avec l'unité de traitement est relié à l'autre appareil de pesage pour traiter des données relatives aux poids des capsules vides (100), ledit moyen de commande étant approprié pour obtenir les poids nets des capsules (100) à partir desdits poids des capsules vides et remplies (100).

10. Procédé de vérification du poids total pour des capsules (100), comprenant les étapes consistant à:
- remplir les capsules vides (100) par au moins un poste de remplissage (20) d'une machine de remplissage (2) selon un ordre de remplissage défini;
- enlever les capsules remplies (100) de la machine de remplissage (2) et transporter les capsules remplies (100) par le moyen d'enlèvement (21) du moyen de transfert (4), au moyen d'acheminement (5) du moyen de transfert (4);
- acheminer les capsules (100) de façon coulissante vers un appareil de pesage (3) à travers au moins un conduit dudit moyen d'acheminement (5);
- accumuler les capsules remplies (100) dans ledit au moins un conduit dudit moyen d'acheminement (5);
- transférer les capsules remplies (100) dudit au moins un conduit dudit moyen d'acheminement (5) audit appareil de pesage (3);
- peser les capsules remplies (100) dans l'appareil de pesage (3) pour détecter des données relatives aux poids des capsules remplies (100);
dans lequel ledit transporter inclut livrer les capsules (100) à une entrée respective (5a) dudit au moins un conduit (5), ladite entrée (5a) étant agencée immédiatement en-dessous du moyen d'enlèvement (21) de façon que ledit au moins un conduit reçoit du moyen d'enlèvement (21) les capsules (100) de manière guidée et selon ledit ordre de remplissage défini, ledit procédé étant **caractérisé en ce que** les capsules remplies (100) sont enlevées et transportées, acheminées, accumulées, transférées et pesées selon ledit ordre de remplissage défini.

11. Procédé selon la revendication 10 comprenant les étapes consistant à:
- traiter lesdites données relatives au poids des capsules remplies (100) dans une unité de traitement; et
- commander, à partir desdites données, le au moins un poste de remplissage (20) de la machine de remplissage (2) par le moyen de commande.

12. Procédé selon la revendication 10, comprenant les étapes consistant à:
- traiter lesdites données relatives au poids des capsules remplies (100) dans une unité de traitement; et
- identifier, à partir desdites données, d'éventuels doseurs individuels en état de dysfonctionnement dudit au moins un poste de remplissage (20) de la machine de remplissage (2).

13. Procédé selon la revendication 12, comprenant l'étape de remplacement desdits éventuels doseurs individuels en état de dysfonctionnement.

14. Procédé selon l'une quelconque des revendications 10 à 13, comprenant les étapes consistant à:
- peser les capsules vides (100) dans un autre appareil de pesage pour détecter des données relatives aux poids des capsules vides (100);
- transférer de manière ordonnée les capsules vides (100) de l'autre appareil de pesage à la machine de remplissage (2); et
- obtenir les poids nets des capsules remplies (100) à partir desdites données relatives aux poids des capsules vides et remplies (100).
